# FASCICULE DE BREVET EUROPEEN

(11) **EP 3 077 327 B1**
(45) Date de publication et mention de la délivrance du brevet: **26.06.2019**
(21) Numéro de dépôt: 14828294.0
(22) Date de dépôt: 28.11.2014
(51) Int. Cl.: F24S 70/20, F24S 70/12, B81C 1/00, B23K 26/00

(54) **ABSORBEUR SOLAIRE THERMIQUE AVEC STRUCTURE DE SURFACE ET LEUR PROCÉDÉ DE RÉALISATION**
SONNENWÄRME-ABSORBER UMFASSEND OBERFLÄCHENSTRUKTUR UND VERFAHREN ZUR HERSTELLUNG DAVON
SOLAR HEAT ABSORBER WITH SURFACE STRUCTURE AND METHOD FOR THE PRODUCTION THEREOF

(30) Priorité: 04.12.2013 FR 1362104
(43) Date de publication de la demande: 12.10.2016
(73) Titulaire: Commissariat à l'Énergie Atomique et aux Énergies Alternatives, 75015 Paris (FR)
(72) Inventeur: DELLEA, Olivier, F-42350 La Talaudière (FR); OLLIER, Emmanuel, F-38000 Grenoble (FR)
(74) Mandataire: Gevers & Orès
(86) Numéro de dépôt international: PCT/IB2014/066420
(87) Numéro de publication internationale: WO 2015/083051

(56) Documents cités:
- EP-A1- 0 068 776
- WO-A1-2012/057073
- WO-A1-2013/149747
- WO-A1-2013/165014
- WO-A2-03/054630
- FR-A1- 2 978 688
- JP-A- 2007 190 604
- US-A- 5 236 763
- US-A1- 2009 020 924
- CELANOVIC IVAN ET AL: "Two-dimensional tungsten photonic crystals as selective thermal emitters", APPLIED PHYSICS LETTERS, AMERICAN INSTITUTE OF PHYSICS, US, vol. 92, no. 19, 13 mai 2008 (2008-05-13), pages 193101-193101, XP012106913, ISSN: 0003-6951, DOI: 10.1063/1.2927484

## Description

La présente invention concerne un absorbeur solaire thermique apte à fonctionner à des températures élevées et comprenant une structure de surface texturée et un procédé de fabrication d'un tel absorbeur.

Il est connu de réaliser un traitement de surface sélectif en longueurs d'ondes pour les absorbeurs solaires thermiques afin d'améliorer l'efficacité de conversion du rayonnement solaire en chaleur.

Le principe de fonctionnement d'un absorbeur solaire thermique est simple et consiste pour l'absorbeur solaire à absorber l'énergie qui vient du soleil pour chauffer un liquide comme par exemple de l'eau ou de la vapeur d'eau, circulant en contact avec l'absorbeur.

Deux exigences principales de qualité guident la conception et la réalisation d'un absorbeur solaire thermique : celle d'absorber efficacement l'énergie du rayonnement solaire et celle de réfléchir efficacement le rayonnement thermique infrarouge de l'absorbeur pour éviter les pertes thermique et tendre vers la réalisation d'un corps noir.

Plusieurs types de matériaux en couches minces ont déjà fait l'objet d'études pour ce type d'application comme par exemple le chrome noir, le Ni-Al₂O₃, l'acier inoxydable, le nitrure d'aluminium (AlN), le Mo-Al₂O₃, et Mo-AlN. Certains de ces matériaux sont mêmes industrialisés en étant produit à grande échelle. Cependant, ces matériaux assurant cette sélectivité n'ont démontré leur potentiel que jusqu'à 600°C, car au-delà de cette température la stabilité même des dépôts des couches n'est pas garantie voire défectueuse.

Pour des températures élevées, c'est-à-dire des températures supérieures ou égales à 600°C, les matériaux W, Mo, Pt, Ni, Si sont connus pour être plus stables thermiquement. Cependant ces matériaux en l'absence de texturation de leur surface ne présentent pas ou peu de sélectivité, c'est-à-dire présente une faible absorption du spectre solaire et une faible réflexion dans le domaine de l'infrarouge. Comme décrit dans l'article de J. Wang et al., intitulé « Simulation of two-dimensional Mo photonic crystal for high-temperature solar-slective absorber », Phys. Status Solidi A 2007, N°8, 1988-1992 (2010), ces matériaux réfractaires plans s'écartent par leurs spectres en réflexion de la courbe de sélectivité idéale pour les absorbeurs thermiques solaires dont la longueur d'onde seuil λₜₕ est proche de 2 µm.

Afin d'augmenter la sélectivité spectrale de l'absorbeur thermique et de maintenir son efficacité de conversion à ces températures, il est connu de structurer ou texturer la surface de matériaux réfractaires pour obtenir les propriétés optiques nécessaires à un absorbeur thermique sélectif, c'est-à-dire une absorption du rayonnement électromagnétique solaire dans le visible supérieure à 95 % et une émissivité dans l'infrarouge (IR) inférieure à 5%.

Généralement les structurations de surface appliquées sont réalisées en utilisant des cristaux photoniques.

Dans ce cadre, des travaux d'investigation, limités généralement à des travaux de simulation des performances de certaines structures de surface dans le domaine des absorbeurs solaires thermiques, et se souciant peu de l'industrialisation de la fabrication de ces structures, ont considéré différents types de cristaux photoniques et ont été publiés.

Parmi les cristaux photoniques, connus pour être des micro ou nanostructures périodiques qui affectent de manière avantageuse la propagation des ondes électromagnétiques, des formes unidimensionnelles (1D), bidimensionnelles (2D) et tridimensionnelles (3D) ont été étudiées, les dimensions représentant le nombre de directions selon lesquelles il existe une périodicité de la constante diélectrique.

Les structures de surface étudiées sont relativement classiques et comprennent une matrice de trous circulaires ou carrés, une matrice de plots, une matrice de pyramides, une succession de rainures parallèles, des réseaux croisés de poutres.

Lorsque des procédés de fabrication sont proposés pour certaines de ces structures, ces derniers sont complexes à réaliser et incompatibles avec une production à grande échelle.

Pour une production à grande échelle, il est nécessaire de pouvoir réaliser les dimensions caractéristiques obtenues de la structure de surface de l'ordre du micromètre ou inférieures sans avoir recours à l'utilisation de méthodes de photolithographie classiques mettant en oeuvre une exposition d'une résine photosensible ou une écriture par faisceau d'électrons.

L'article de H. Saui et al., intitulé « Numerical study on tungsten selective radiators with various micro/nano structures », Photovoltaic Specialists Conference, 2005, IEEE, 762-765 (2005) décrit un structure de surface réalisée par un réseau de trous disposés dans un matériau métallique tel que le tungstène (W), les dimensions explorées pour le rayon, l'épaisseur du film et la période des motifs étant de l'ordre du micromètre.

WO 2013/165014 A1 divulgue un absorbeur solaire thermique apte à fonctionner à des températures élevées comprenant une structure de surface texturée comprenant: un substrat ayant une surface plane ou courbe, constitué en un premier matériau optiquement réfléchissant, stable thermiquement, et ayant un ensemble d'éléments de surface définissant une surface de référence, et un ensemble d'éléments texturaux ayant une même structure élémentaire et répartis le long de la surface de référence selon un agencement bidimensionnel, la structure élémentaire d'un élément textural comportant une cavité, formée dans le substrat, ayant un bord de même niveau que la surface de référence et un fond.

L'objet de l'invention est de proposer une structuration de surface avec une géométrie innovante pour obtenir une sélectivité en longueur d'ondes, adaptée aux absorbeurs solaires thermiques, et compatible avec un procédé de fabrication industrielle à bas coût, pouvant être mis en oeuvre à grande échelle sur une grande surface et compatible avec des matériaux réfractaires à des températures élevées.

A cette fin, l'invention a pour objet u un absorbeur solaire thermique apte à fonctionner à des températures élevées, c'est-à-dire des températures supérieures ou égales à 600°C, et comprenant une structure de surface texturée comprenant
un substrat ayant une surface plane ou courbe, constitué en un premier matériau optiquement réfléchissant, stable thermiquement, et ayant un ensemble d'éléments de surface définissant une surface d'extension de référence, et
un ensemble d'éléments texturaux ayant une même structure élémentaire et répartis le long de la surface de référence selon un agencement bidimensionnel,
la structure élémentaire d'un élément textural comportent une cavité, formée dans le substrat, ayant un bord de même niveau que la surface de référence et un fond, carcatérisé en ce que ladite cavité s'évase depuis le fond jusqu'au bord, et en ce que ladite structure élémentaire d'un élément textual comporte en outre
une couronne en excroissance par rapport à la surface de référence et positionnée immédiatement en périphérie du bord de la cavité.

Suivant des modes particuliers de réalisation, l'absorbeur solaire comporte l'une ou plusieurs des caractéristiques suivantes, prises seules ou en combinaison :
- deux couronnes immédiatement voisines sont séparées partout par un espace ou se touchent en un unique point, et présentent une distance s de séparation, supérieure ou égale à zéro, inférieure ou égale à 500 nm, et de préférence inférieure ou égale à 100 nm ;
- la structure élémentaire présente une symétrie cylindrique autour d'un axe de symétrie traversant le fond de la cavité et normal à la surface de référence; et
la cavité a un diamètre D, considéré au niveau de la surface de référence, et une profondeur H, définie comme la distance séparant le fond de la surface de référence, telles qu'un premier rapport de forme H/D, défini comme le rapport de la profondeur H sur le diamètre D de la cavité est strictement supérieur à un ; et,
la couronne possède une largeur de base l, définie comme la largeur la plus grande d'une section radiale de la couronne en étant égale à la différence entre un rayon externe correspondant au contour externe de la couronne et un rayon interne correspondant au contour interne de la couronne pris au niveau de la surface de référence, et possède une hauteur h, définie comme la distance séparant la surface de référence et la plus grande d'une unique ou plusieurs des crêtes de la couronne, la largeur de base l et la hauteur h étant telles qu'un deuxième facteur de forme h/l, défini comme le rapport de la hauteur sur la largeur de base de la couronne est strictement supérieur à un ; et
le diamètre transversal D, la profondeur H de la cavité, la largeur de base l, la hauteur h de la couronne sont tous inférieurs ou égaux à 10 µm, de préférence ou égaux à 1 µm ;
- le profil d'une section radiale de la cavité est une première courbe plane symétrique par l'axe de symétrie, l'axe de symétrie étant orienté positivement depuis le fond vers la surface de référence et ayant pour origine son point d'intersection avec la surface de référence, et
le point d'intersection de l'axe de symétrie avec le fond est un minimum de la première courbe plane, et
la distance séparant deux points symétriques de la première courbe plane situés à un même niveau décroissant lorsque le niveau correspondant des points symétriques décroît ;
- la première courbe plane est une portion de parabole ou une portion de l'enveloppe d'un cône bidimensionnel ;
- le profil d'une demi-section radiale de la couronne selon un demi-plan radial est une deuxième courbe plane définie par une fonction d'évolution du niveau de la couronne en fonction du rayon de celle-ci,
la fonction d'évolution du profil du niveau de la couronne étant à valeurs positives et définie sur un intervalle fermé de rayons compris entre le rayon interne de la couronne et le rayon externe de la couronne, et
la valeur du niveau de la couronne correspondant au rayon interne étant égale à zéro et la valeur du niveau de la couronne correspondant au rayon externe étant supérieure ou égale à zéro et inférieure à la moitié de la hauteur h ; et
la fonction d'évolution étant d'abord croissante sur un premier sous-intervalle jusqu'à atteindre un seuil de niveau hₛₑᵤᵢₗ strictement supérieur à la moitié de la hauteur h, puis
sur un deuxième sous-intervalle évoluant au-dessus du seuil de niveau hₛₑᵤᵢₗ jusqu'à atteindre la hauteur de la couronne et ensuite évoluant jusqu'à atteindre à nouveau le niveau de seuil hₛₑᵤᵢₗ, puis
sur un troisième sous-intervalle décroissant jusqu'à atteindre le niveau correspondant au rayon externe ;
- les couronnes sont d'un seul tenant avec le substrat et constituées du même premier matériau ;
- la structure de surface texturée comprend une couche d'un deuxième matériau, déposée sur l'ensemble des cavités et des couronnes), et de zones de la surface de référence du substrat non recouvertes par les couronnes,
le deuxième matériau étant composé d'une ou plusieurs couches ;
- les couronnes sont constituées d'un deuxième matériau différent du premier matériau constituant le substrat ;
- le deuxième matériau est un matériau compris dans l'ensemble formé par les métaux tels que le tungstène, le molybdène, les alliages métalliques comme l'acier, les matériaux antireflet tel que l'oxyde de silicium ;
- le premier matériau est un matériau choisi parmi les métaux réfractaires tels que le tungstène, le molybdène..., les céramiques telles que le carbure de silicium et les alliages tels que l'acier ;
- l'agencement des éléments texturaux ayant la même structure élémentaire suivant le plan de référence est réalisé sous la forme d'un pavage de réseaux élémentaires d'éléments texturaux,
les réseaux élémentaires ayant une même configuration de maille compris dans l'ensemble formé par les mailles hexagonales, les mailles carrés, les mailles triangulaires et étant caractérisé par un degré de compacité des éléments texturaux ;

L'invention a également pour objet un procédé de fabrication d'un absorbeur solaire thermique apte à fonctionner à des températures élevées c'est-à-dire des températures supérieures ou égales à 600°C et comprenant une structure de surface texturée , le procédé comprenant une première étape consistant à fournir un substrat ayant une surface plane ou courbe, constitué en un premier matériau optiquement réfléchissant, stable thermiquement, et ayant une surface de référence, et comprennent en outre une deuxième étape, exécutée à la suite de la première étape, consistant à
réaliser un ensemble d'éléments texturaux ayant une même structure élémentaire et répartis le long de la surface référence selon un agencement bidimensionnel, la structure élémentaire d'un élément textural comportant
une cavité, formée dans le substrat, ayant un bord de même niveau que la surface de référence et un fond, s'évase depuis le fond jusqu'au bord, et en ce que ladite structure élémentaire d'un élément textual comporte
une couronne en excroissance par rapport à la surface de référence et positionnée immédiatement en périphérie du bord de la cavité.

Suivant des modes particuliers de réalisation, le procédé de fabrication comporte l'une ou plusieurs des caractéristiques suivantes, prises seules ou en combinaison :
- la deuxième étape comprend les étapes successives consistant à
dans une troisième étape déposer sur la surface lisse du substrat formant la surface de référence un film de particules lenticulaires en assemblage compact, les particules lenticulaires étant configurées pour micro-focaliser un faisceau de rayonnement laser sur le substrat, puis,
dans une quatrième étape soumettre les particules lenticulaires à un flux laser impulsionnel configuré de sorte que lorsque l'énergie micro-focalisée atteint un seuil d'ablation du premier matériau constituant le substrat, une cavité est formée dans le substrat à l'emplacement d'une zone de contact de la particule lenticulaire en étant accompagnée d'une remontée de matière formant couronne autour de la cavité ;.
- le procédé de fabrication définie ci-dessus comprend une étape de dépôt d'un deuxième matériau mono ou multicouches sur la surface de référence du substrat, exécutée entre les première et deuxième étapes, le deuxième matériau présentant une faible émissivité au rayonnement infrarouge, et
la deuxième étape comprend les étapes successives consistant à
dans une cinquième étape déposer sur la surface plane du deuxième matériau un film de particules lenticulaires en assemblage compact, les particules lenticulaires étant configurées pour micro-focaliser un faisceau de rayonnement laser sur la couche du deuxième matériau et le substrat immédiatement en dessous, puis,
dans une sixième étape soumettre les particules lenticulaires à un flux laser impulsionnel configuré de sorte que lorsque l'énergie micro-focalisée atteint un seuil d'ablation des deuxième et premier matériaux, une cavité est formée dans le deuxième matériau et dans le substrat à l'emplacement d'une zone de contact de la particule lenticulaire en étant accompagnée d'une remontée du deuxième matériau formant une couronne autour de la cavité percée dans le substrat ;
- le dépôt d'un film compact de particules lenticulaires est réalisé par une technique de dépôt compris dans l'ensemble formé par une technique de Langmuir-Blodgett, Langmuir-Schaefer et un dépôt par tournette ;
- les particules lenticulaires sont des particules en un matériau diélectrique compris dans l'ensemble formé par les oxydes, la silice, le quartz, les polymères tels que le polystyrène ou des particules en un matériau électriquement conducteur compris dans l'ensemble formé par l'or, l'argent, l'argent, l'inox.
les particules lenticulaires ont la forme d'une sphère ou d'un sphère modifiée par un processus de gravure chimique, thermique, par plasma mis en oeuvre dans une étape de gravure exécutée entre les troisième et quatrième étapes, ou entre les cinquième et sixième étapes, le diamètre de la sphère étant compris entre quelques dizaines de nm et plusieurs dizaines de microns.
- le faisceau laser appliqué sur le film des particules est collimaté et délivré par des impulsions allant de la femto-seconde à la nanoseconde, de préférence allant de la femto-seconde à la picoseconde ;
- le procédé de fabrication comprend une étape de nettoyage des particules lenticulaires résiduelles exécutée après la deuxième étape ;
- le procédé de fabrication comprend une étape de dépôt d'un deuxième matériau mono ou multicouches, exécutée après la deuxième étape ou l'étape de nettoyage.

L'invention sera mieux comprise à la lecture de la description de plusieurs formes de réalisation qui vont suivre, données uniquement d'exemples et faites en se référant aux dessins dans lesquels :
La Figure 1 est une vue d'un premier mode de réalisation d'une structure de surface de l'invention ;
La Figure 2 est une vue d'un premier mode de réalisation d'une structure de surface de l'invention ;
La Figure 3 est une vue d'un exemple d'un réseau élémentaire d'éléments texturaux de la Figure 2 organisant l'agencement bidimensionnel d'une structure de surface selon l'invention ;
La Figure 4 est une vue comparative des performances en terrme de reflexivité entre la stucture de surface des Figures 2 et 3 et une structure classique d'un plan lisse de tungstène ;
La Figure 5 est une vue comparative des performances en terrme de réflectivité entre la stucture de surface des Figures 2 et 3 et une structure de surface texturée classique comportant des trous circulaires et dépourvue de collerette ;
La Figure 6 est une vue d'un troisième mode de réalisation d'une structure de surface de l'invention ;
La Figure 7 est une vue d'un quatrième mode de réalisation d'une structure de surface de l'invention ;
La Figure 8 est un ordinogramme d'un procédé général de fabrication d'une structure de surface des Figures 1-3 et 6-7 ;
La Figure 9 est un ordinogramme d'un premier mode de réalisation du procédé général de fabrication de la Figure 7 ;
Les Figures 10 et 11 sont des vues au microscope à balayage électronique de structures de surfaces de la Figure 1 réalisées respectivement avec un laser femtoseconde et un laser picosonde ;
La Figure 12 est un ordinogramme d'un deuxième mode de réalisation du procédé général de fabrication de la Figure 7 ;
La Figure 13 est une vue des zones d'ablation-vaporisation et de fusion des premier et deuxième matériaux lorsque le deuxième mode de réalisation du procédé de la Figure 12 est mis en oeuvre ;
La Figure 14 est une vue de particules lenticulaires ayant une forme sphérique modifiée ;
La Figure 15 est une vue comparative des zones d'ablation-vaporisation et de fusion des premier et deuxième matériaux en fonction de la forme modifiée des particules lenticulaires lorsque le deuxième mode de réalisation du procédé de la Figure 12 est mis en oeuvre.

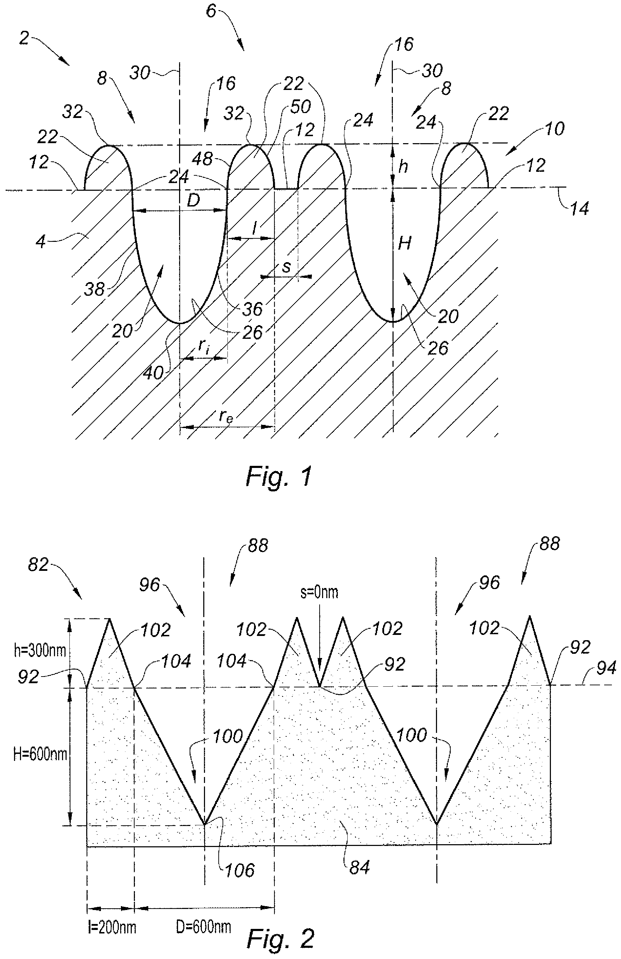

Suivant la Figure 1 et un premier mode de réalisation, une structure de surface texturée 2 pour un absorbeur solaire thermique, apte à fonctionner à des températures élevées, comprend un substrat 4 ayant une surface, ici plane, et un ensemble 6 d'éléments texturaux 8.

Le substrat 4 est constitué en un premier matériau optiquement réfléchissant, ici un matériau réfractaire, stable thermiquement. Le substrat 4 possède un ensemble 10 d'éléments de surface, ici plans, 12 appartenant à une même surface de référence 14, ici un plan de référence représenté en bout sur la Figure 1. En variante, d'autres surfaces lisses de référence peuvent être utilisées comme par expemle une surface cylindrique, une surface paraboloïde, une surface hyperboloïde...

Les éléments texturaux 8 possèdent une même structure élémentaire 16 et sont répartis le long du plan de référence 14 selon un agencement périodique bidimensionnel.

Sur la Figure 1, cet agencement bidimensionnel n'est pas visible en raison de la représentation d'une coupe particulière de la structure de surface 2, ici limitée à deux éléments texturaux 8 immédiatement voisins par souci de simplification.

La structure élémentaire 16 d'un élément textural 8 comporte une cavité 20 et une couronne 22 ou collerette.

La cavité 20, formée dans le substrat 4, comporte un bord 24 et un fond 26, le bord étant défini comme le contour de la cavité 20 au niveau du plan de référence 14.

La cavité 20 s'évase depuis le fond 26 jusqu'au bord 24.

La couronne 22, en excroissance par rapport au plan de référence 14 est positionnée immédiatement en périphérie du bord de la cavité 20.

Les deux couronnes 22 de toute paire d'éléments texturaux immédiatement voisins sont séparées par un espace.

Comme représenté sur la Figure 1, deux couronnes immédiatement voisines présentent une distance s de séparation, inférieure ou égale à 500 nm, de préférence inférieure ou égale à 100 nm, voire nulle, la distance s étant définie comme le minimum des distances séparant deux points quelconques des deux couronnes, l'un des points étant pris sur une couronne, l'autre point étant pris sur l'autre couronne, et la distance s étant atteinte sur une paire unique de points.

Ici, les couronnes sont d'un seul tenant avec le substrat et constituées du même premier matériau.

Ici, sur la Figure 1, la structure élémentaire 16 présente une symétrie cylindrique autour d'un axe de symétrie 30 qui traverse le fond 26 de la cavité 20 et qui est normal au plan de référence 10.

La cavité 20 a un diamètre D, considérée au niveau du plan de référence 14, et une profondeur H, définie comme la distance séparant le fond 26 du plan de référence 14, telles qu'un premier rapport de forme H/D, défini comme le rapport de la profondeur H sur le diamètre D de la cavité est strictement supérieur à un.

La couronne 22 a une largeur de base l qui est définie comme la largeur la plus grande de la base d'une section radiale de la couronne 22 et qui est égale à la distance radiale séparant le bord 24 de la cavité 20 et le contour externe de la couronne 22.

La couronne 22 a une hauteur h, définie comme la distance séparant le plan de référence 14 et la plus grande d'une unique ou plusieurs des crêtes de la couronne. La largeur de base l et la hauteur h sont telles qu'un deuxième facteur de forme h/l, défini comme le rapport de la hauteur sur la largeur de base de la couronne est strictement supérieur à un.

Ici, sur la Figure 1 et de manière particulière, la couronne 22 possède une unique crête 32. En variante, la couronne possède au moins deux crêtes.

Le diamètre transversal D, la profondeur H de la cavité 20, la largeur de base l, la hauteur h de la couronne 22 sont tous inférieurs ou égaux à 10 µm, de préférence ou égaux à 1 µm.

Lorsque comme représentée sur la Figure 1, la structure élémentaire 16 présente une symétrie cylindrique autour d'un axe de symétrie 30, un profil 36 d'une section radiale de la cavité 20 est une première courbe plane 38.

La première courbe plane 38 est symétrique par rapport à l'axe de symétrie 30, orienté positivement depuis le fond 26 de la cavité 20 vers le plan de référence 14, gradué en niveaux et ayant pour origine son intersection avec le plan de référence 14.

L'axe de symétrie 30 présente un point d'intersection 40 avec le fond de la cavité 20 qui est un minimum de la première courbe 38, et la distance séparant deux points symétriques de la première courbe, situés à un même niveau, décroit lorsque le niveau correspondant des points symétriques décroît.

La première courbe plane 38, illustrée sur la Figure 1, est par exemple une portion de parabole.

Lorsque comme représentée sur la Figure 1, la structure élémentaire 12 présente une symétrie cylindrique autour d'un axe de symétrie 30, un profil 48 d'une section radiale de la couronne 22 selon un demi-plan radial est une deuxième courbe plane 50 définie par une fonction d'évolution du niveau de la couronne 22 en fonction du rayon r de celle-ci.

La fonction d'évolution du profil du niveau de la couronne est à valeurs positives et elle est définie sur un intervalle fermé de rayons compris entre le rayon interne ri de la couronne 22, égal au rayon de la cavité D/2, et le rayon externe re de la couronne 22, égal au rayon interne ri de la couronne augmenté de sa largeur l. La valeur du niveau de la couronne 22 au rayon interne est égale à zéro et la valeur du niveau de la couronne 22 au rayon externe est supérieure ou égale à zéro et inférieure à la moitié de la hauteur h de la couronne.

De manière générale, la fonction d'évolution du profil de la couronne est d'abord croissante sur un premier sous-intervalle jusqu'à atteindre un seuil de niveau hₛₑᵤᵢₗ, supérieur ou égal à à la moitié de la hauteur h de la couronne. Puis, sur un deuxième sous-intervalle, elle évolue au-dessus du seuil de niveau hₛₑᵤᵢₗ jusqu'à atteindre la hauteur h de la couronne et ensuite évolue jusqu'à atteindre à nouveau le seuil. Ensuite, sur un troisième sous-intervalle la fonction d'évolution décroit jusqu'à atteindre le niveau correspondant au rayon externe.

Dans le cas particulier de la couronne illustrée sur la Figure 1, la deuxième courbe 50 est une portion de parabole et le seuil de niveau coïncide avec le niveau de l'unique crête, c'est-à-dire la hauteur h de la couronne 22.

Suivant la Figure 2, une deuxième forme de réalisation d'une structure de surface 82 est analogue à la structure de surface 2 selon la première forme de réalisation et en diffère par les courbes de profil des cavités et des couronnes. Ici, la première courbe plane est une portion de l'enveloppe d'un cône bidimensionnel, et la deuxième courbe plane est une portion de l'enveloppe d'un cône bidimensionnel orienté en sens inverse. Ainsi, la structure de surface 82 comprend des éléments texturaux 88, formés chacun d'un trou ou cavité conique 100 et d'une couronne 102. La couronne 102, en excroissance par rapport à un plan de référence 94 du substrat 84, possède une forme extérieure également conique. Le plan de référence 94 est défini ici également à l'instar de la structure de surface 2 de la Figure 1 comme un plan d'extension d'un ensemble d'éléments de surface plans formant les jointures des couronnes entre elles. Sur la Figure 2 cette extension bidimensionnelle plane n'est pas visible en raison du fait que les deux couronnes représentées se touchent localement en un point et que le plan de coupe passe par ce point et les axes de symétrie cylindrique. Néanmoins cette extension bidimensionnelle existe bel et bien. Les dimensions D, l, s, H, h de la structure de surface 82 sont respectivement égales à 600nm, 200nm, 0nm, 600nm et 300nm

En variante, la structure élémentaire ne présente pas d'axe de symétrie cylindrique.

De manière générale, l'agencement des éléments texturaux ayant la même structure élémentaire suivant le plan de référence est réalisé sous la forme d'un pavage de réseaux élémentaires d'éléments texturaux. Les réseaux élémentaires ont une même configuration de maille compris dans l'ensemble formé par les mailles hexagonales, les mailles carrés, les mailles triangulaires et sont caractérisés par un degré de compacité des éléments texturaux entre eux.

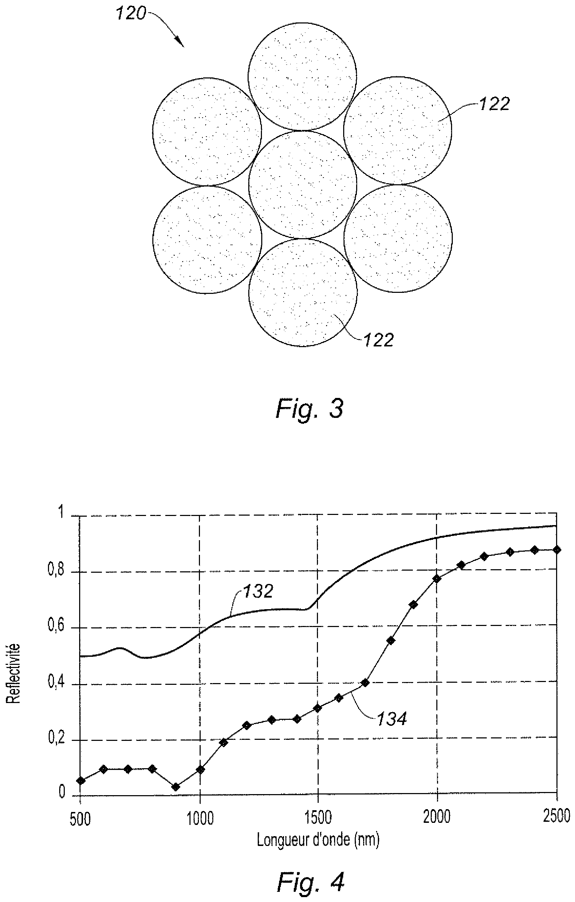

A titre d'exemple, suivant la Figure 3, la configuration particulière d'un réseau élémentaire 120 à maille hexagonale compacte est illustrée. Chacun des six disques 122 du réseau élémentaire 120 représente un élément textural. Ce réseau élémentaire 120 organise l'agencement suivant le plan de référence du deuxième mode de réalisation de la structure de surface illustrée à la Figure 2. Ainsi un disque 122 correspond en particulier à un élément textural 88 de la Figure 2.

Suivant la Figure 4, sont comparées les performances en termes de réflectivité optique d'une première structure de surface plane de tungstène (W) et celles d'une deuxième structure de surface de tungstène texturée selon la géométrie de la deuxième forme de réalisation décrite dans les Figures 2 et 3. Une première courbe 132 représente l'évolution de la réflectivité en fonction de la longueur d'onde pour la première structure tandis qu'une deuxième courbe 134 représente l'évolution de la réflectivité en fonction de la longueur d'onde pour la deuxième structure. L'apport bénéfique de la texturation par la géométrie de l'invention apparait clairement puisque, avec une longueur d'onde seuil proche de 2 µm, la sélectivité optique présentée par la deuxième courbe 134 se rapproche nettement plus de la courbe de sélectivité idéale d'un absorbeur thermique solaire que la sélectivité optique présentée par la première courbe 132.

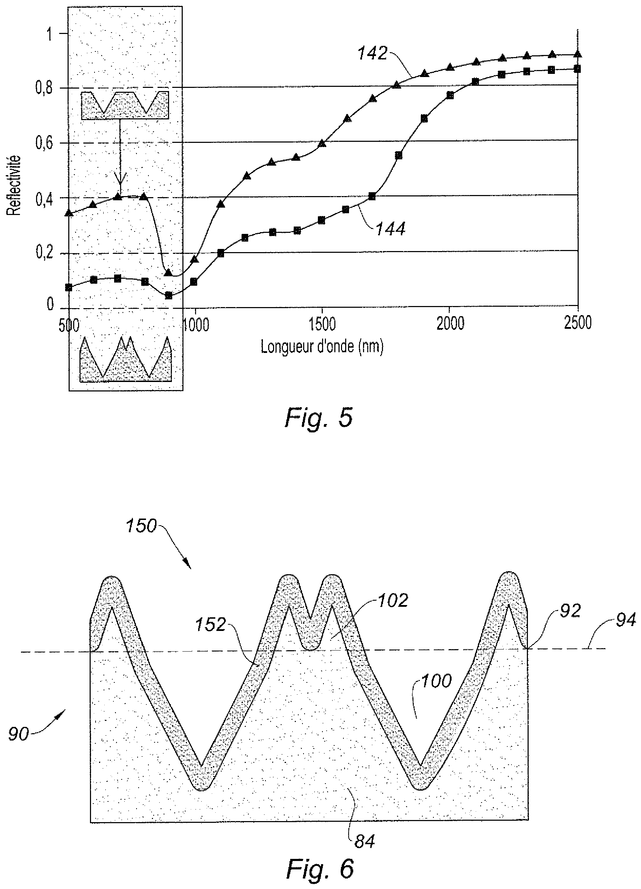

Suivant la Figure 5, sont comparées les performances en termes de réflectivité optique entre d'une part, une première structure de surface de tungstène (W) classique avec des trous coniques sans collerettes répartis dans une configuration hexagonale compacte à cavités, et, d'autre part, une deuxième structure de surface de tungstène texturée selon la géométrie de la deuxième forme de réalisation de l'invention, c'est-à-dire la même structure que la première structure mais avec une collerette en périphérie de chaque trou et en excroissance par rapport au plan du substrat. Une première courbe 142 représente l'évolution de la réflectivité en fonction de la longueur d'onde pour la première structure tandis qu'une deuxième courbe 144 représente l'évolution de la réflectivité en fonction de la longueur d'onde pour la deuxième structure. L'apport bénéfique de la collerette sur la sélectivité de la réponse optique apparait clairement puisque la sélectivité optique présentée par la deuxième courbe 144 se rapproche nettement plus de la courbe de sélectivité idéale d'un absorbeur thermique solaire que la sélectivité optique présentée par la première courbe 142.

Suivant la Figure 6 et une troisième forme de réalisation de l'invention, dérivée de la deuxième forme de réalisation décrite dans la Figure 2, une structure de surface texturée 150 comprend la structure de surface 90 de la Figure 2 et par-dessus une couche 152 en un deuxième matériau. La couche 152 est déposée sur l'ensemble des cavités 100 et des couronnes 102 formant les éléments texturaux, et des zones 92 non creuses du plan de référence 94 du substrat 84, non recouvertes par les couronnes 102. Le deuxième matériau est composé d'une ou plusieurs couches.

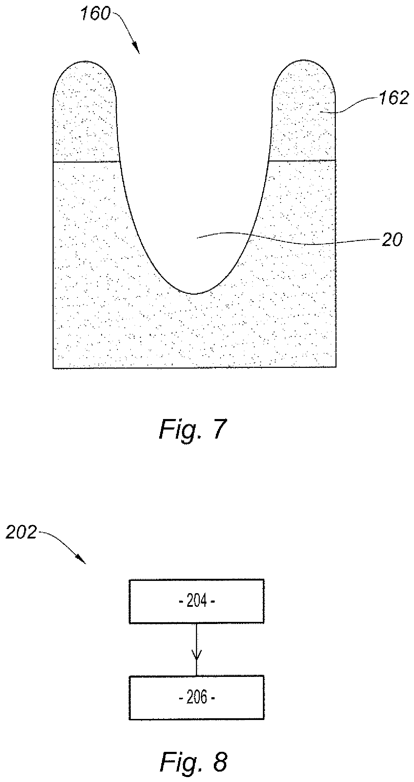

Suivant la Figure 7 et une quatrième forme réalisation de l'invention, une structure de surface texturée 160 est dérivée de la structure de surface 2 de la Figure 1 en remplaçant les couronnes 22 d'un seul tenant avec le substrat et en un même premier matériau que ce dernier par des couronnes 162 constituées en un deuxième matériau différent du premier matériau constituant le substrat.

De manière avantageuse, une structure bi ou multi-matériaux telle que proposée dans la quatrième forme de réalisation permet par exemple d'obtenir une couronne et un milieu entourant la cavité constitués de matériaux différents. Ceci permet d'optimiser encore la structure de base de l'élément texturant en choisissant par exemple des propriétés optiques différentes pour le deuxième matériau supérieur de la couronne et pour le premier matériau inférieur du substrat. De préférence le premier matériau supérieur est un métal réflecteur infrarouge qui permet de limiter l'émissivité dans l'infrarouge de la structure et ainsi d'améliorer la performance de l'absorbeur. Le premier matériau inférieur du substrat est un matériau absorbant dans le domaine du visible.

Le premier matériau est un matériau compris dans l'ensemble des métaux réfractaires tels que le tungstène (W), le molybdène (Mo), le platine (Pt), le nickel (Ni), le silicium (Si), ..., les céramiques telles que le carbure de silicium et les alliages tels que l'acier.

Le deuxième matériau constituant, soit la couche mince déposée sur un substrat préalablement texturé et comportant en un seul tenant les couronnes en le même premier matériau, soit un matériau de la couronne du premier matériau peut être tout type de matériau et en particulier :
- un métal, comme par exemple le molybdène, le tungstène, le nickel, le platine.
- un alliage comme l'acier,
- un matériau ou un ensemble de matériaux permettant d'améliorer la fonction optique, comme un antireflet tel par exemple l'oxyde de silicium,
- un matériau ou un ensemble de matériaux permettant d'améliorer la fonction de tenue au vieillissement ou de protection vis-à-vis de l'environnement, par de l'oxyde de silicium.

Suivant la Figure 8, un procédé de fabrication 202 d'une structure de surface texturée pour un absorbeur solaire thermique, apte à fonctionner à des températures élevées et telle que décrite dans les Figures 1 à 3 et 6 à 7 est fondée sur l'interaction laser/particules/substrat.

Le procédé 202 comprend globalement une première étape 204 suivie d'une deuxième étape 206.

Dans la première étape 204, un substrat ayant une surface plane ou régulièrement courbe comme par exemple celle d'un cylindre, un sphère, un paraboloïde ou un hyperboloïde est fourni. Le substrat est constitué en un premier matériau optiquement réfléchissant, stable thermiquement pour des températures élevées qui dépassent 1000°C, et possède une surface de référence. Le premier matériau est par exemple un matériau refractaire et/ou un métal.

Puis, dans la deuxième étape 206, un ensemble d'éléments texturaux est réalisé. Les éléments structuraux ont une même structure élémentaire et sont répartis le long de la surface de référence selon un agencement bidimensionnel. La structure élémentaire d'un élément textural comporte une cavité, formée dans le substrat, et une couronne ou collerette. La cavité comporte un bord de même niveau que la surface lisse de référence et un fond ; elle s'évase depuis le fond jusqu'au bord. La couronne, en excroissance par rapport à la surface lisse de référence, est positionnée immédiatement en périphérie du bord de la cavité.

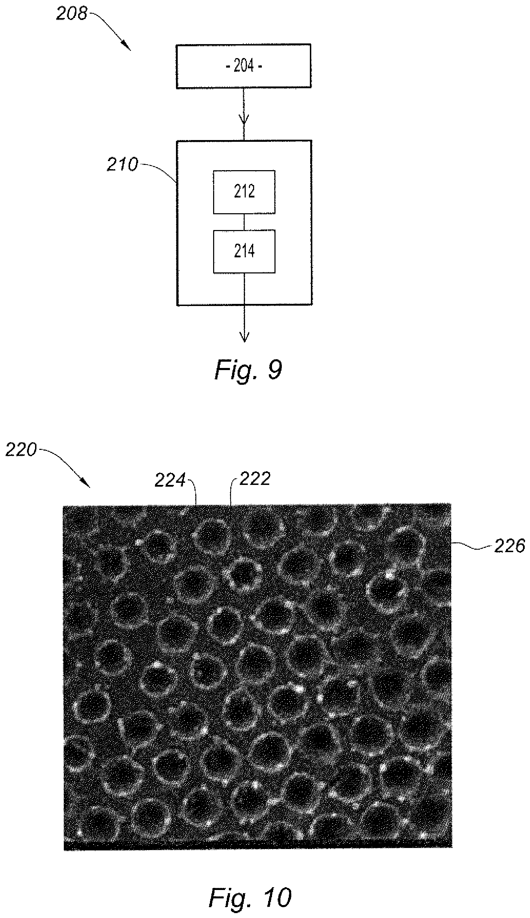

Suivant la Figure 9 et un premier mode de réalisation 208 particulier du procédé général 202 décrit à la Figure 8, la deuxième étape 206 est une étape 210 qui comprend une troisième étape 212 et une quatrième étape 214, exécutées successivement.

Dans la troisième étape 208, un film de particules lenticulaires en assemblage compact est déposé sur la surface du substrat formant la surface io e plan de référence, les particules lenticulaires étant configurées pour micro-focaliser un faisceau de rayonnement laser sur le substrat.

Puis, dans la quatrième étape 210 les particules lenticulaires sont soumises à un flux laser impulsionnel, configuré de sorte que lorsque l'énergie du laser, micro-focalisée individuellement par chaque particule lenticulaire, atteint un seuil d'ablation du premier matériau constituant le substrat, une cavité est alors formée dans le substrat à l'emplacement d'une zone de contact de la particule lenticulaire en étant accompagnée d'une remontée de matière qui forme une couronne autour de la cavité.

Ainsi, par le procédé 202 avec seulement quelques étapes technologiques, principalement le dépôt de particules lenticulaires (troisième étape 208) et des tirs laser (quatrième étape 210), il est possible d'obtenir à la surface d'un matériau réfractaire une structuration de type hexagonal compact avec des microstructures formées de trous entourés de couronnes telle que décrite dans les Figures 1 à 2 et 6 à 7.

Le premier matériau constituant le substrat peut être, comme il a déjà été vu, tous types de matériaux solides, comme par exemple des métaux réfractaires tels le tungstène ou le molybdène, des céramiques comme le carbure de silicium, ou des alliages comme des aciers.

La surface du substrat doit présenter une rugosité Ra inférieure à 0,1 µm. Le substrat fourni à la première étape a donc subi au préalable une étape de préparation de sa surface, par exemple par polissage.

Les particules lenticulaires sont des particules en un matériau diélectrique comme par exemple des oxydes, la silice, le quartz, des polymères tels que le polystyrène qui agissent comme des éléments de focalisation optique.

En variante, les particules lenticulaires sont des particules en un matériau électriquement conducteur comme par exemple l'or et l'argent qui mettent alors un processus de concentration du champ différent par effet plasmon.

Les particules lenticulaires ont la forme d'une sphère ou d'une sphère modifiée par un processus de gravure chimique, thermique, par plasma mis en oeuvre dans une étape de gravure exécutée entre les troisième et quatrième étapes, le diamètre de la sphère étant compris entre quelques dizaines de nm à plusieurs diaines de microns, de préférence de 250nm à 2µm.

Les techniques de dépôt de film compact de particules permettant la mise en oeuvre de la troisième étape sont nombreuses et connues, par exemple la méthode Langmuir-Blodgett, Langmuir-Schaefer et le dépôt par tournette (en anglais dénommé « spin coating »).

La méthode de Langmuir-Blodgett est décrite par exemple dans l'article de S. Acharya et al., intitulée « Soft Langmuir-Blodgett Technique for Hard Nanomaterials », Advanced Materials, 2009, 21, 2959-298, et l'article de M. Bardosova intitulé « The Langmuir-Blodgett Aproach to Making Colloidal Phtonic crystals from Silica Spheres », Advanced Materials, 2010, 22, 3104-3124.

La méthode de dépôt par tournette est décrite par exemple dans l'article de T.E. Bauert, intitulé « Self-Assembling of Particles Monolayers by Spin-Coating », European Celles and Materials, Vol. 10, Suppl. 5, 2005.

La méthode Langmuir-Blodgett utilise un liquide porteur, par exemple de l'eau, dans lequel est préalablement immergé en position verticale le substrat dit « cible » sur lequel doit être reportée la monocouche de particules lenticulaires de forme sphérique. Les particules lenticulaires sont dispensées à la surface du liquide sur laquelle elles se dispersent. Une barrière mécanique est alors mise en mouvement pour réduire progressivement la surface occupée par les particules afin de les mettre en compression. Lorsque le film compact est formé, le substrat est mis en mouvement pour déposer par capillarité le film à sa surface. La barrière doit accompagner ce mouvement de tirage afin de conserver la mise en compression des particules.

L'approche, mise en oeuvre dan la quatrième étape, est connue et décrite dans l'article de Z. Chen et al., intitulé « Photonic nanojet enhancement of backscattering of light by nanoparticles : a potential novel visible-light ultramicroscopy technique », April 2004, Vol. 12, N° 7, Optics Express 1214. Elle consiste à exploiter des micro ou nano-sphères (polystyrène, silice, quartz...) comme des « lentilles » de focalisation. Ainsi, dans cette configuration, un faisceau collimaté ou focalisé illumine le film compact de particules. L'énergie du faisceau est alors concentrée sur le substrat par chacune des sphères. Cette méthode permet ainsi à partir d'un seul faisceau d'illumination et dont la dimension excède largement celle des sphères d'obtenir sur le substrat une focalisation « multipoints » bien en dessous de la limite de diffraction du faisceau incident et avec une périodicité submicronique.

Les sources de lumière utilisées dans cette approche peuvent être des faisceaux laser puisés, collimatés ou focalisés, pour graver ou ablater directement le substrat. Plus précisément, les lasers impulsionnels utilisés sont par exemple des lasers femtosecondes qui donnent la possibilité de graver de nombreux matériaux de par le mode d'interaction laser-matière propre aux impulsions ultrabrèves. Les impulsions laser ultrabrèves -15 recouvrent un domaine de durée d'impulsion allant de la femtoseconde (10 -12 s) à la picoseconde (10 s). Il est aussi possible d'utiliser des lasers nanosecondes considérées comme des impulsions « longues ».

Suivant la Figure 10, une première structure de surface 220 avec des trous 222 et des couronnes 224 périphériques d'un seul tenant avec le substrat 226 et en un même premier matériau a été obtenue par un procédé du premier mode de réalisation dans lequel un rayonnement laser est appliqué sur une couche de particules en dioxyde de silice de 1µm de diamètre directement déposée sur le substrat en acier.

Le laser utilisé est un laser femtoseconde Ti:Sa de Bright Raymax Lasers™, de longueur d'onde 800nm, de puissance maximale 2,5W, cadencé à 5 kHz et de faisceau gaussien.

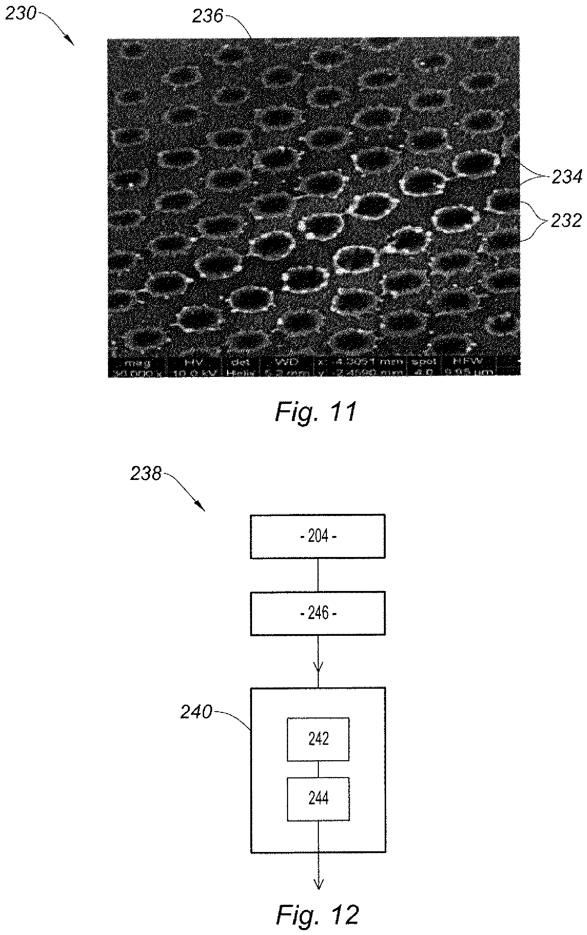

Suivant la Figure 11, une deuxième structure de surface 230 avec des trous 232 et des couronnes périphériques 234 d'un seul tenant et en un même premier matériau a été obtenue également par un procédé du premier mode de réalisation dans lequel un rayonnement laser est appliqué sur une couche de particules en dioxyde de silice de 1µm de diamètre directement déposée sur le substrat 236 en acier.

Le laser utilisé est ici un laser picoseconde de longueur d'onde 1064 nm, de puissance maximale quelques Watts, cadencé à 1 kHz et de faisceau gaussien.

Il est à remarquer qu'en général après la quatrième étape des tirs laser, une étape de nettoyage des particules résiduelles est mise en oeuvre selon l'une des nombreuses techniques connues à ce jour. Par exemple, une méthode classique utilisée pour éliminer les particules résiduelles consiste à immerger le substrat dans un solvant tel que l'eau, l'éthanol ou l'acétone en présence d'ultrasons pendant quelques minutes.

En variante et de manière optionnelle, une couche de passivation de la structure de surface peut être déposée, comme par exemple du dioxyde de silicium, du nitrure de silicium par un procédé du type PVD, CVD, sol gel, ou impression.

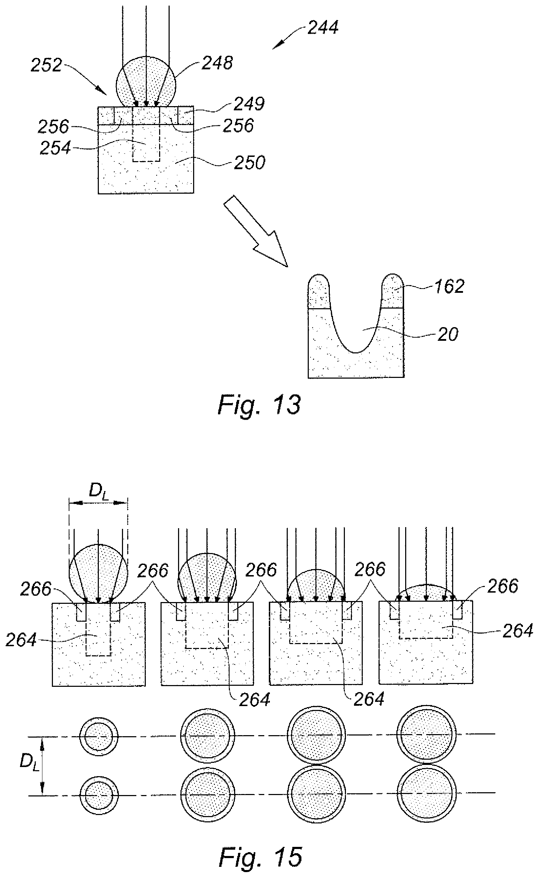

Suivant les Figures 12 et 13, un deuxième mode 238 particulier de réalisation du procédé général 202 de la Figure 8 est décrit, dans lequel la deuxième étape 206 est une étape 240 qui comprend une cinquième étape 242 et une sixième étape 244, exécutées successivement et remplaçant respectivement la troisième étape 208 et la quatrième étape 210.

Le procédé 238 selon le deuxième mode de réalisation comprend une étape de dépôt 246 d'un deuxième matériau en mono ou multicouches sur le plan de référence du substrat, exécutée entre les première et deuxième étapes 204, 240, le deuxième matériau présentant une faible émissivité au rayonnement infrarouge.

Dans la cinquième étape 242 un film de particules lenticulaires est déposé en assemblage compact sur la surface plane du deuxième matériau. Les particules lenticulaires sont configurées pour micro-focaliser un faisceau de rayonnement laser sur la couche du deuxième matériau et le substrat situé immédiatement en dessous. Sur la Figure 13, une seule particule lenticulaire 248 est représentée.

Dans la sixième étape 244, les particules lenticulaires sont soumises à un flux laser impulsionnel, configuré de sorte que lorsque l'énergie micro-focalisée atteint un seuil d'ablation des deuxième et premier matériaux, 249, 250, une cavité est formée dans le deuxième matériau et dans le substrat à l'emplacement d'une zone de contact 252 de la particule lenticulaire en étant accompagnée d'une remontée du deuxième matériau formant une couronne autour de la cavité percée dans le substrat. Suivant la Figure 13, la zone de contact 252 se décompose en une première zone centrale 254 de pulvérisation et de vaporisation des premier et deuxième matériaux qui y sont contenus, et une deuxième zone 256 périphérique de fusion du seul deuxième matériau.

Ainsi une structure bi ou multi-matériaux structurée est obtenue directement par le procédé d'exposition laser du tapis de nanoparticules comme le montre la Figure 13.

Ainsi, avec ce procédé une couronne et un milieu entourant la cavité sont constitués de matériaux différents. Ceci permet d'optimiser encore la structure de base en choisissant par exemple des propriétés optiques différentes pour le deuxième matériau supérieur et pour le premier matériau inférieur du substrat. De préférence le matériau supérieur sera un métal réflecteur infrarouge_qui permettra de limiter l'émissivité dans l'infrarouge de la structure et ainsi d'améliorer la performance de l'absorbeur. Le matériau inférieur formant le substrat sera un matériau absorbant dans le domaine du visible.

Dans les configurations précitées, les dimensions de l'élément de structure pourront être adaptées par l'ajustement de divers paramètres comme la nature des particules de micro-focalisation de l'énergie du faisceau laser.

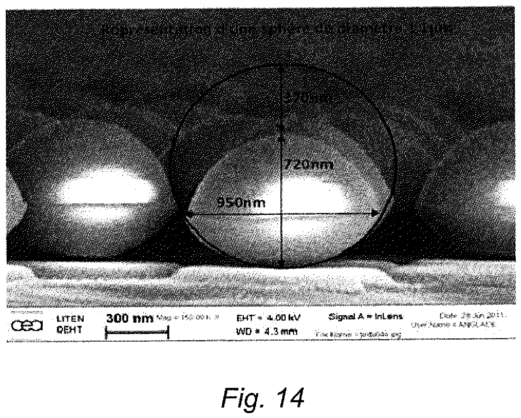

Pour ajuster la dimension du trou et de la couronne, des microsphères ou microlentilles dont la forme a été modifiée, par exemple par gravure plasma, peuvent être utilisées. La Figure 14 représente un exemple de modification de la géométrie de particules sphériques de silice par l'action d'un plasma CHF₃/O₂.

Suivant la Figure 15, l'adaptation des géométries des collerettes et cavités par la modification de la forme des microlentilles est mise en évidence. La modification de la focalisation permet d'adapter les tailles des zones d'ablation 264 et de fusion 266 et donc d'adapter la taille des cavités et collerettes, ainsi que l'espacement entre collerettes.

Les paramètres du laser tels que la longueur d'onde, le taux de répétition, la largeur des impulsions, la polarisation, la forme spatiale et temporelle du faisceau, la fluence permettent également de moduler la géométrie de la structure de surface.

Il est à remarquer que dans des variantes, les étapes de nettoyage, d'étalement de particules, d'exposition au faisceau laser pourront être réalisées plusieurs fois pour augmenter la profondeur des trous.

En variante, il est possible également de fixer les particules à la surface de substrat par des liaisons chimiques, ceci permettant de tirer avec plus de puissance et de creuser plus profond.

## Revendications

1. Absorbeur solaire thermique apte à fonctionner à des températures élevées, c'est-à-dire des températures supérieures ou égales à 600°C, et comprenant une structure de surface texturée comprenant :
un substrat (4 ; 84) ayant une surface plane ou courbe, constitué en un premier matériau optiquement réfléchissant, stable thermiquement, et ayant un ensemble d'éléments de surface (12 ; 92) définissant une surface de référence (14 ; 94), et
un ensemble d'éléments texturaux (8 ; 88) ayant une même structure élémentaire (16 ; 96) et répartis le long de la surface de référence (14 ; 94) selon un agencement bidimensionnel,
la structure élémentaire (16 ; 96) d'un élément textural (8 ; 88) comportant une cavité (20 ; 100), formée dans le substrat (4 ; 94), ayant un bord (24 ; 104) de même niveau que la surface de référence (14 ; 94) et un fond (26 ; 106), et
**caractérisée en ce que** ladite cavité s'évase depuis le fond (26 ; 106) jusqu'au bord (24 ; 104), et **en ce que** ladite structure élémentaire (16, 96) d'un élément textural (8, 88) comporte en outre une couronne (22 ; 102) en excroissance par rapport à la surface de référence (14 ; 104) et positionnée immédiatement en périphérie du bord (24 ; 104) de la cavité (20 ; 100).

2. Absorbeur solaire selon la revendication 1, dans laquelle deux couronnes (22 ; 102) immédiatement voisines sont séparées partout par un espace ou se touchent en un unique point, et présentent une distance s de séparation, supérieure ou égale à zéro, inférieure ou égale à 500 nm, et de préférence inférieure ou égale à 100 nm.

3. Absorbeur solaire selon l'une quelconque des revendications 1 et 2, dans laquelle
la structure élémentaire (26) présente une symétrie cylindrique autour d'un axe de symétrie (30) traversant le fond (26) de la cavité (20) et normal à la surface de référence (14); et
la cavité (20 ; 100) a un diamètre D, considéré au niveau de la surface de référence (14 ; 94), et une profondeur H, définie comme la distance séparant le fond (26 ; 106) de la surface de référence (14 ; 94), telles qu'un premier rapport de forme H/D, défini comme le rapport de la profondeur H sur le diamètre D de la cavité (20 ; 100) est strictement supérieur à un ; et,
la couronne (22 ; 102) possède une largeur de base l, définie comme la largeur la plus grande d'une section radiale de la couronne (22 ; 102) en étant égale à la différence entre un rayon externe correspondant au contour externe de la couronne et un rayon interne correspondant au contour interne de la couronne pris au niveau de la surface de référence (14 ; 94), et possède une hauteur h, définie comme la distance séparant la surface de référence et la plus grande d'une unique ou plusieurs des crêtes de la couronne, la largeur de base l et la hauteur h étant telles qu'un deuxième facteur de forme h/l, défini comme le rapport de la hauteur sur !a largeur de base de la couronne est strictement supérieur à un ; et
le diamètre transversal D, la profondeur H de la cavité, la largeur de base î, la hauteur h de la couronne sont tous inférieurs ou égaux à 10 pm, de préférence ou égaux à 1 pm.

4. Absorbeur solaire selon la revendication 3, dans laquelle le profil d'une section radiale de la cavité (20 ; 100) est une première courbe plane (38) symétrique par l'axe de symétrie (30), l'axe de symétrie (30) étant orienté positivement depuis le fond (26 ; 106) vers la surface de référence (14 ; 94) et ayant pour origine son point d'intersection avec la surface de référence (14 ; 94), et
le point d'intersection de l'axe de symétrie (30) avec le fond (26 ; 106) est un minimum de la première courbe plane (38), et
la distance séparant deux points symétriques de la première courbe plane (38) situés à un même niveau décroissant lorsque le niveau correspondant des points symétriques décroît.

5. Absorbeur solaire selon la revendication 4, dans laquelle
la première courbe plane (38) est une portion de parabole ou une portion de l'enveloppe d'un cône bidimensionnel.

6. Absorbeur solaire selon l'une quelconque des revendications 3 à 5 dans laquelle
le profil d'une demi-section radiale de la couronne (22 ; 102) selon un demi-plan radial est une deuxième courbe plane (50) définie par une fonction d'évolution du niveau de la couronne en fonction du rayon de celle-ci,
la fonction d'évolution du profil du niveau de la couronne (22 ; 102) étant à valeurs positives et définie sur un intervalle fermé de rayons compris entre le rayon interne de la couronne (22 ; 102) et le rayon externe de fa couronne (22 ; 102), et
la valeur du niveau de la couronne (22 ; 102) correspondant au rayon interne étant égale à zéro et la valeur du niveau de la couronne correspondant au rayon externe étant supérieure ou égale à zéro et inférieure à la moitié de la hauteur h ; et
la fonction d'évolution étant d'abord croissante sur un premier sous-intervalle jusqu'à atteindre un seuil de niveau hₛₑᵤᵢₗ strictement supérieur à la moitié de la hauteur h, puis
sur un deuxième sous-intervalle évoluant au-dessus du seuil de niveau hₛₑᵤᵢₗ jusqu'à atteindre la hauteur de la couronne et ensuite évoluant jusqu'à atteindre à nouveau le niveau de seuil hₛₑᵤᵢₗ, puis
sur un troisième sous-intervalle décroissant jusqu'à atteindre le niveau correspondant au rayon externe.

7. Absorbeur solaire selon l'une quelconque des revendications 1 à 6, dans laquelle
les couronnes (22 ; 102) sont d'un seul tenant avec le substrat (4 ; 84) et constituées du même premier matériau.

8. Absorbeur solaire selon la revendication 7, comprenant une couche (152) d'un deuxième matériau, déposée sur l'ensemble des cavités (100) et des couronnes (102), et de zones (92) de la surface de référence (94) du substrat (4 ; 84) non recouvertes par les couronnes (102),
le deuxième matériau étant composé d'une ou plusieurs couches.

9. Absorbeur solaire selon l'une quelconque des revendications 1 à 6, dans laquelle
les couronnes (162) sont constituées d'un deuxième matériau différent du premier matériau constituant le substrat.

10. Absorbeur solaire selon l'une quelconque des revendications 8 à 9, dans laquelle
le deuxième matériau est un matériau compris dans l'ensemble formé par les métaux tels que le tungstène, le molybdène, les alliages métalliques comme l'acier, les matériaux antireflet tel que l'oxyde de silicium.

11. Absorbeur solaire selon l'une quelconque des revendications 1 à 10 dans laquelle le premier matériau est un matériau choisi parmi les métaux réfractaires, tels que le tungstène et le molybdène, les céramiques telles que le carbure de silicium et les alliages tels que l'acier.

12. Absorbeur solaire selon l'une quelconque des revendications 1 à 11, dans laquelle l'agencement des éléments texturaux (88) ayant la même structure élémentaire (96) suivant le plan de référence est réalisé sous la forme d'un pavage de réseaux élémentaires (120) d'éléments texturaux (88),
les réseaux élémentaires (120) ayant une même configuration de maille compris dans l'ensemble formé par les mailles hexagonales, les mailles carrés, les mailles triangulaires et étant **caractérisé par** un degré de compacité de des éléments texturaux.

13. Procédé de fabrication d'un absorbeur solaire thermique apte à fonctionner à des températures élevées c'est-à-dire des températures supérieures ou égales à 600°C, et comprenant une structure de surface texturée, le procédé comprenant une première étape (204) consistant à fournir un substrat ayant une surface plane ou courbe, constitué en un premier matériau optiquement réfléchissant, stable thermiquement, et ayant une surface de référence, et comprenant en outre une deuxième étape (206 ; 210 ; 240), exécutée à la suite de la première étape (204), consistant à
réaliser un ensemble d'éléments texturaux ayant une même structure élémentaire et répartis le long de la surface de référence selon un agencement bidimensionnel, la structure élémentaire d'un élément textural comportant
une cavité, formée dans le substrat, ayant un bord de même niveau que la surface de référence et un fond, et
**caractérisé en ce que** ladite cavité s'évase depuis le fond jusqu'au bord, et **en ce que** ladite structure élémentaire d'un élément textural comporte une couronne en excroissance par rapport à la surface de référence et positionnée immédiatement en périphérie du bord de la cavité.

14. Procédé de fabrication selon la revendication 13, dans lequel la deuxième étape (210) comprend les étapes successives consistant à :
dans une troisième étape (212) déposer sur la surface lisse du substrat formant la surface de référence un film de particules lenticulaires en assemblage compact, les particules lenticulaires étant configurées pour micro-focaliser un faisceau de rayonnement laser sur le substrat, puis,
dans une quatrième étape (214) soumettre les particules lenticulaires à un flux laser impulsionnel configuré de sorte que lorsque l'énergie micro-focalisée atteint un seuil d'ablation du premier matériau constituant le substrat, une cavité est formée dans le substrat à l'emplacement d'une zone de contact de la particule lenticulaire en étant accompagnée d'une remontée de matière formant couronne autour de la cavité.

15. Procédé de fabrication selon la revendication 13,
comprenant une étape (246) de dépôt d'un deuxième matériau mono ou multicouches sur la surface de référence du substrat, exécutée entre les première et deuxième étapes (204 ; 240), le deuxième matériau présentant une faible émissivité au rayonnement infrarouge, et
dans lequel la deuxième étape (240) comprend les étapes successives consistant à :
dans une cinquième étape (242) déposer sur la surface plane du deuxième matériau un film de particules lenticulaires en assemblage compact, les particules lenticulaires étant configurées pour micro-focaliser un faisceau de rayonnement laser sur la couche du deuxième matériau et le substrat immédiatement en dessous, puis,
dans une sixième étape (244) soumettre les particules lenticulaires à un flux laser impulsionnel configuré de sorte que lorsque l'énergie micro-focalisée atteint un seuil d'ablation des deuxième et premier matériaux, une cavité est formée dans le deuxième matériau et dans le substrat à l'emplacement d'une zone de contact de la particule lenticulaire en étant accompagnée d'une remontée du deuxième matériau formant une couronne autour de la cavité percée dans le substrat.

16. Procédé de fabrication selon l'un quelconque des revendications 14 à 15, dans lequel le dépôt d'un film compact de particules lenticulaires est réalisé par une technique de dépôt compris dans l'ensemble formé par une technique de Langmuir-Blodgett, Langmuir-Schaefer et un dépôt par tournette.

17. Procédé de fabrication selon l'une quelconque des revendications 14 à 16, dans lequel
l es particules lenticulaires sont des particules en un matériau diélectrique compris dans l'ensemble formé par les oxydes, la silice, le quartz, les polymères tels que le polystyrène ou des particules en un matériau électriquement conducteur compris dans l'ensemble formé par l'or, l'argent, l'argent, l'inox,
l es particules lenticulaires ont la forme d'une sphère ou d'un sphère modifiée par un processus de gravure chimique, thermique, par plasma mis en oeuvre dans une étape de gravure exécutée entre les troisième et quatrième étapes, (212,214) ou entre les cinquième et sixième étapes (242,244), le diamètre de la sphère étant compris entre quelques dizaines de nm et plusieurs dizaines de microns.

18. Procédé de fabrication selon l'une quelconque des revendications 14 à 17, dans lequel le faisceau laser appliqué sur le film des particules est collimaté et délivré par des impulsions allant de la femto-seconde à la nanoseconde, de préférence allant de la femto-seconde à la picoseconde.

19. Procédé de fabrication selon l'une quelconque des revendications 14 à 18, comprenant une étape de nettoyage des particules lenticulaires résiduelles exécutée après la deuxième étape (206).

20. Procédé de fabrication selon l'une quelconque des revendications 13 à 18, comprenant une étape de dépôt d'un deuxième matériau mono ou multicouches, exécutée après la deuxième étape (206) ou l'étape de nettoyage.

## Patentansprüche

1. Sonnenwärme-Absorber, der ausgelegt ist, um bei erhöhten Temperaturen zu funktionieren, d. h. bei Temperaturen von mehr als oder gleich 600 °C, und umfassend eine texturierte Oberflächenstruktur, umfassend:
ein Substrat (4; 84), das eine ebene oder gekrümmte Oberfläche aufweist, aus einem ersten optisch reflektierenden, thermisch stabilen Material besteht, und eine Gruppe von Oberflächenelementen (12; 92) aufweist, die eine Referenzoberfläche (14; 94) definieren, und
eine Gruppe von Texturelementen (8; 88), die eine gleiche elementare Struktur (16; 96) aufweisen, und entlang der Referenzoberfläche (14; 94) gemäß einer zweidimensionalen Anordnung verteilt sind,
wobei die elementare Struktur (16; 96) eines Texturelements (8; 88) einen Hohlraum (20; 100) umfasst, der im Substrat (4; 94) gebildet ist, der einen Rand (24; 104) auf der gleichen Ebene wie die Referenzoberfläche (14; 94) und einen Boden (26; 106) aufweist, und
**dadurch gekennzeichnet, dass** sich der Hohlraum vom Boden (26; 106) bis zum Rand (24; 104) aufweitet, und dadurch, dass die elementare Struktur (16, 96) eines Texturelements (8, 88) außerdem eine Krone (22; 102) umfasst, die mit Bezug auf die Referenzoberfläche (14; 104) ausgewölbt ist und unmittelbar am Umfang des Rands (24; 104) des Hohlraums (20; 100) positioniert ist.

2. Sonnenwärme-Absorber nach Anspruch 1, wobei zwei unmittelbar benachbarte Kronen (22; 102) überall durch einen Raum getrennt sind oder sich an einem einzigen Punkt berühren und einen Trennabstand s aufweisen, der größer als oder gleich null, kleiner als oder gleich 500 nm und vorzugsweise kleiner als oder gleich 100 nm ist.

3. Sonnenwärme-Absorber nach einem der Ansprüche 1 und 2, wobei
die elementare Struktur (26) eine zylindrische Symmetrie um eine Symmetrieachse (30) aufweist, die den Boden (26) des Hohlraums (20) quert und normal auf der Referenzoberfläche (14) ist; und
der Hohlraum (20; 100) einen Durchmesser D, betrachtet auf der Ebene der Referenzoberfläche (14; 94), und eine Tiefe H aufweist, definiert als der Abstand, der den Boden (26; 106) von der Referenzoberfläche (14; 94) trennt, so dass ein erstes Seitenverhältnis H/D, definiert als das Verhältnis der Tiefe H zum Durchmesser D des Hohlraums (20; 100), strikt größer als eins ist; und
die Krone (22; 102) eine Breite mit der Basis l besitzt, definiert als die größte Breite eines radialen Abschnitts der Krone (22; 102), indem sie gleich der Differenz zwischen einem externen Radius, der dem externen Umfang der Krone entspricht, und einem internen Radius ist, der dem internen Umfang der Krone, gesehen auf der Ebene der Referenzoberfläche (14; 94), entspricht, und eine Höhe h besitzt, die als der Abstand definiert ist, der die Referenzoberfläche und die größte einer einzigen oder mehrerer der Spitzen der Krone trennt, wobei die Breite der Basis l und die Höhe h derart sind, dass ein zweites Seitenverhältnis h/l, definiert als das Verhältnis der Höhe zur Breite der Basis der Krone, strikt größer als eins ist; und
der Querdurchmesser D, die Tiefe H des Hohlraums, die Breite der Basis î, die Höhe h der Krone alle kleiner als oder gleich 10 pm, vorzugsweise oder gleich 1 pm sind.

4. Sonnenwärme-Absorber nach Anspruch 3, wobei das Profil eines radialen Abschnitts des Hohlraums (20; 100) eine erste symmetrische flache Kurve (38) durch die Symmetrieachse (30) ist, wobei die Symmetrieachse (30) positiv vom Boden (26; 106) hin zur Referenzoberfläche (14; 94) ausgerichtet ist und als Ursprung ihren Schnittpunkt mit der Referenzoberfläche (14; 94) aufweist, und
der Schnittpunkt der Symmetrieachse (30) mit dem Boden (26; 106) ein Minimum der ersten flachen Kurve (38) ist, und
der Abstand, der zwei symmetrische Punkte der ersten flachen Kurve (38) trennt, die sich auf einer gleichen Ebene befinden, abnimmt, wenn die entsprechende Ebene der symmetrischen Punkte abnimmt.

5. Sonnenwärme-Absorber nach Anspruch 4, wobei
die erste flache Kurve (38) ein Parabolabschnitt oder ein Abschnitt der Hülle eines zweidimensionalen Kegelteils ist.

6. Sonnenwärme-Absorber nach einem der Ansprüche 3 bis 5, wobei
das Profil eines radialen Halbabschnitts der Krone (22; 102) gemäß einer radialen Halbebene eine zweite flache Kurve (50) ist, definiert durch eine Veränderungsfunktion der Ebene der Krone je nach dem Radius dieser,
wobei die Veränderungsfunktion des Profils der Ebene der Krone (22; 102) positive Werte aufweist und auf einem geschlossenen Intervall von Radien definiert ist, das im Bereich zwischen dem internen Radius der Krone (22; 102) und dem externen Radius der Krone (22; 102) liegt; und
der Wert der Ebene der Krone (22; 102), der dem internen Radius entspricht, gleich null ist, und der Wert der Ebene der Krone, der dem externen Radius entspricht, größer als oder gleich null und kleiner als die Hälfte der Höhe h ist; und
die Veränderungsfunktion zunächst auf einem ersten Unterintervall ansteigend ist, bis sie eine Schwelle der Ebene hₛₑᵤᵢₗ erreicht, die strikt höher als die Hälfte der Höhe h ist, dann
auf einem zweiten Unterinterwall, das sich über der Schwelle der Ebene hₛₑᵤᵢₗ entwickelt, bis sie die Höhe der Krone erreicht, und sich dann entwickelt, bis sie erneut die Schwellenebene hₛₑᵤᵢₗ erreicht, dann
auf einem dritten abnehmenden Unterintervall, bis sie die Ebene erreicht, die dem externen Radius entspricht.

7. Sonnenwärme-Absorber nach einem der Ansprüche 1 bis 6, wobei
die Kronen (22; 102) einstückig mit dem Substrat (4; 84) sind und aus dem gleichen ersten Material bestehen.

8. Sonnenwärme-Absorber nach Anspruch 7, umfassend eine Schicht (152) eines zweiten Materials, die auf der Gruppe der Hohlräume (100) und der Kronen (102), und der Bereiche (92) der Referenzoberfläche (94) des Substrats (4; 84), die nicht von den Kronen (102) bedeckt sind, abgelegt ist,
wobei das zweite Material aus einer oder mehreren Schichten zusammengesetzt ist.

9. Sonnenwärme-Absorber nach einem der Ansprüche 1 bis 6, wobei
die Kronen (162) aus einem zweiten Material bestehen, das verschieden vom ersten Material ist, aus dem das Substrat besteht.

10. Sonnenwärme-Absorber nach einem der Ansprüche 8 bis 9, wobei
das zweite Material ein Material ist, enthalten in der Gruppe, gebildet aus Metallen wie z. B. Wolfram, Molybdän, metallischen Legierungen wie Stahl, Antireflexmaterialien wie z. B. Siliciumoxid.

11. Sonnenwärme-Absorber nach einem der Ansprüche 1 bis 10, wobei das erste Material ein Material ist, ausgewählt aus den hitzebeständigen Metallen wie z. B. Wolfram und Molybdän, Keramiken wie z. B. Siliziumcarbid und Legierungen wie z. B. Stahl.

12. Sonnenwärme-Absorber nach einem der Ansprüche 1 bis 11, wobei die Anordnung der Texturelemente (88), die die gleiche elementare Struktur (96) aufweisen, gemäß der Referenzebene, in Form eines Pflasters von elementaren Netzen (120) von Texturelementen (88) durchgeführt ist,
wobei die elementaren Netze (120) eine gleiche Maschenkonfiguration aufweisen, enthalten in der Einheit, gebildet aus den hexagonalen Maschen, rechtwinkligen Maschen, dreieckigen Maschen, und durch einen Grad der Kompaktheit der Texturelemente gekennzeichnet sind.

13. Verfahren zur Herstellung eines Sonnenwärme-Absorbers, der ausgelegt ist, um bei erhöhten Temperaturen zu funktionieren, d. h. bei Temperaturen von mehr als oder gleich 600 °C, und umfassend eine texturierten Oberflächenstruktur, wobei das Verfahren einen ersten Schritt (204) umfasst, der darin besteht, ein Substrat zu liefern, das eine ebene oder gekrümmt Oberfläche aufweist, aus einem ersten optisch reflektierenden thermisch stabilen Material besteht, und eine Referenzoberfläche aufweist, und umfassend außerdem einen zweiten Schritt (206; 210; 240), durchgeführt nach dem ersten Schritt (204), der darin besteht, eine Einheit von Texturelementen durchzuführen, die eine gleiche elementare Struktur aufweisen und entlang der Referenzoberfläche gemäß einer zweidimensionalen Anordnung verteilt sind, wobei die elementare Struktur eines Texturelements einen Hohlraum umfasst, der im Substrat gebildet ist, der einen Rand auf der gleichen Ebene wie die Referenzoberfläche und einen Boden umfasst,
**dadurch gekennzeichnet, dass** sich der Hohlraum vom Boden bis zum Rand aufweitet, und dadurch, dass die elementare Struktur eines Texturelements eine Krone umfasst, die mit Bezug auf die Referenzoberfläche ausgewölbt ist und unmittelbar am Umfang des Rands des Hohlraums positioniert ist.

14. Verfahren zur Herstellung nach Anspruch 13, wobei der zweite Schritt (210) die aufeinander folgenden Schritte umfasst, die darin bestehen:
in einem dritten Schritt (212) auf der glatten Oberfläche des Substrats, die die Referenzoberfläche bildet, einen Film aus linsenförmigen Partikeln in kompakter Baugruppe abzulegen, wobei die linsenförmigen Partikel konfiguriert sind, um ein Laserstrahlenbündel auf das Substrat zu mikrofokussieren, dann
in einem vierten Schritt (214) die linsenförmigen Partikel einem Impulslaserfluss zu unterziehen, der derart konfiguriert ist, dass, wenn die mikrofokussierte Energie eine Ablationsschwelle des ersten Materials, aus dem das Substrat besteht, erreicht, ein Hohlraum im Substrat an der Stelle eines Kontaktbereichs des linsenförmigen Partikels gebildet wird, indem sie von einer Erhöhung des Materials begleitet ist, das die Krone um den Hohlraum bildet.

15. Verfahren zur Herstellung nach Anspruch 13,
umfassend einen Schritt (246) des Ablegens eines zweiten Materials in einer oder in mehreren Schichten auf der Referenzoberfläche des Substrats, durchgeführt zwischen dem ersten und dem zweiten Schritt (204; 240), wobei das zweite Material einen niedrigen Emissionsgrad für Infrarotstrahlung aufweist, und
wobei der zweite Schritt (240) die aufeinander folgenden Schritte umfasst, die darin bestehen:
in einem fünften Schritt (242) auf der ebenen Oberfläche des zweiten Materials einen Film aus linsenförmigen Partikeln in kompakter Baugruppe abzulegen, wobei die linsenförmigen Partikel konfiguriert sind, um ein Laserstrahlenbündel auf die Schicht des zweiten Materials und das unmittelbar darunter liegende Substrat zu mikrofokussieren, dann
in einem sechsten Schritt (244) die linsenförmigen Partikel einem Impulslaserfluss zu unterziehen, der derart konfiguriert ist, dass, wenn die mikrofokussierte Energie eine Ablationsschwelle des zweiten und ersten Materials erreicht, ein Hohlraum im zweiten Material und im Substrat an der Stelle eines Kontaktbereichs des linsenförmigen Partikels gebildet wird, indem sie von einer Erhöhung des Materials begleitet ist, das eine Krone um den durchbrochenen Hohlraum im Substrat bildet.

16. Verfahren zur Herstellung nach einem der Ansprüche 14 bis 15, wobei die Ablage eines kompakten Films aus linsenförmigen Partikeln durch eine Ablagetechnik durchgeführt wird, die in der Gruppe enthalten ist, gebildet durch eine Langmuir-Blodgett-Technik, eine Langmuir-Schaefer-Technik und eine Schleuderablage.

17. Verfahren zur Herstellung nach einem der Ansprüche 14 bis 16, wobei
die linsenförmigen Partikel Partikel aus einem dielektrischen Material sind, enthalten in der Gruppe, gebildet aus Oxiden, Siliziumdioxid, Quarz, Polymeren wie z. B. Polystyren oder Partikeln aus einem elektrisch leitenden Material, enthalten in der Gruppe, gebildet aus Gold, Silber, Silber, Edelstahl,
die linsenförmigen Partikel die Form einer Kugel oder einer Kugel, modifiziert durch einen Prozess der chemischen, thermischen, Plasma-Gravur aufweist, durchgeführt in einem Schritt des Gravierens, ausgeführt zwischen dem dritten und vierten Schritt (212, 214) oder zwischen dem fünften und sechsten Schritt (242, 244), wobei der Durchmesser der Kugel zwischen einigen Zehntel nm und einigen Zehntel Mikrometern liegt.

18. Verfahren zur Herstellung nach einem der Ansprüche 14 bis 17, wobei das Laserbündel, angewendet auf den Film der Partikel, durch Impulse kollimiert und abgegeben wird, die von einer Femtosekunde bis zu einer Nanosekunde reichen, vorzugsweise von einer Femtosekunde zu einer Pikosekunde.

19. Verfahren zur Herstellung nach einem der Ansprüche 14 bis 18 umfassend einen Schritt des Reinigens der linsenförmigen Restpartikel, durchgeführt nach dem zweiten Schritt (206).

20. Verfahren zur Herstellung nach einem der Ansprüche 13 bis 18, umfassend einen Schritt des Ablegens eines zweiten Materials in einer oder in mehreren Schichten durchgeführt nach dem zweiten Schritt (206) oder dem Schritt des Reinigens.

## Claims

1. Thermal solar absorber capable of functioning at high temperatures, i.e. temperatures greater than or equal to 600°C, and comprising a textured surface structure comprising:
a substrate (4; 84) having a flat or curved surface, constituted of a first optically reflective material, thermally stable, and having a set of surface elements (12; 92) defining a reference surface (14; 94), and
a set of textural elements (8; 88) having one same elementary structure (16; 96) and distributed along the reference surface (14; 94) according to a two-dimensional arrangement,
the elementary structure (16; 96) of a textural element (8; 88) comprising a cavity (20; 100), formed in the substrate (4; 94), having an edge (24; 104) at the same level as the reference surface (14; 94) and a bottom (26; 106), and
**characterised in that** said cavity flares from the bottom (26; 106) to the edge (24; 104), and **in that** said elementary structure (16, 96) of a textural element (8, 88) further comprises a crown (22; 102) projecting with respect to the reference surface (14; 104) and positioned immediately at the periphery of the edge (24; 104) of the cavity (20; 100).

2. Solar absorber according to claim 1, wherein two crowns (22; 102) in the immediate proximity of one another are separated all around by a space or touch at one single point, and have a separation distance s, greater than or equal to zero, less than or equal to 500nm, and preferably less than or equal to 100nm.

3. Solar absorber according to any one of claims 1 and 2, wherein
the elementary structure (26) has a cylindrical symmetry about an axis of symmetry (30) passing through the bottom (26) of the cavity (20) and normal to the reference surface (14); and
the cavity (20; 100) has a diameter D, considered at the level of the reference surface (14; 94), and a depth H, defined as the distance separating the bottom (26; 106) from the reference surface (14; 94), such that a first H/D shape ratio, defined as the ratio of the depth H over the diameter D of the cavity (20; 100) is strictly greater than one; and,
the crown (22; 102) has a base width l, defined as the greatest width of a radial cross-section of the crown (22; 102) by being equal to the difference between an outer radius corresponding to the outer edge of the crown and an inner radius corresponding to the inner edge of the crown, taken at the level of the reference surface (14; 94), and has a height h, defined as the distance separating the reference surface and the greatest of one single or several ridges of the crown, the base width l and the height h being such that a second shape factor h/l, defined as the ratio of the height over the base width of the crown is strictly greater than one; and
the transversal diameter D, the depth H of the cavity, the base width l, the height h of the crown are all less than or equal to 10pm, preferably or equal to 1pm.

4. Solar absorber according to claim 3, wherein the profile of a radial cross-section of the cavity (20; 100) is a first flat curve (38) symmetrical through the axis of symmetry (30), the axis of symmetry (30) being oriented positively from the bottom (26; 106) towards the reference surface (14; 94) and having for the origin, the intersection point thereof with the reference surface (14; 94), and
the intersection point of the axis of symmetry (30) with the bottom (26; 106) is a minimum of the first flat curve (38), and
the distance separating two symmetrical points of the first flat curve (38) located at one same level, decreasing when the corresponding level of the symmetrical points decreases.

5. Solar absorber according to claim 4, wherein
the first flat curve (38) is a parabola portion or a portion of the casing of a two-dimensional cone.

6. Solar absorber according to any one of claims 3 to 5, wherein
the profile of a radial half-section of the crown (22; 102) along a radial half-plane is a second flat curve (50) defined by an evolution function of the level of the crown according to the radius thereof,
the evolution function of the profile of the level of the crown (22; 102) being with positive values and defined on a closed interval of radii between the inner radius of the crown (22; 102) and the outer radius of the crown (22; 102), and
the value of the level of the crown (22; 102) corresponding to the inner radius being equal to zero and the value of the level of the crown corresponding to the outer radius being greater than or equal to zero and less than half of the height h; and
the evolution function first increasing on a first sub-interval until it reaches a level threshold h_{threshold} strictly greater than half of the height h, then
on a second sub-interval evolving above the level threshold h_{threshold} until it reaches the height of the crown and then evolving until it again reaches the threshold level h_{threshold}, then
on a third sub-interval decreasing until it reaches the level corresponding to the outer radius.

7. Solar absorber according to any one of claims 1 to 6, wherein
the crowns (22; 102) are of one single holding with the substrate (4; 84) and constituted of the same first material.

8. Solar absorber according to claim 7, comprising a layer (152) of a second material, arranged on all of the cavities (100) and the crowns (102), and zones (92) of the reference surface (94) of the substrate (4; 84) not covered by the crowns (102),
the second material being composed of one or more layers.

9. Solar absorber according to any one of claims 1 to 6, wherein
the crowns (162) are constituted of a second material, different from the first material constituting the substrate.

10. Solar absorber according to any one of claims 8 to 9, wherein
the second material is a material comprised in the assembly formed by metals such as tungsten, molybdenum, metal alloys like steel, anti-reflective materials such as silicon oxide.

11. Solar absorber according to any one of claims 1 to 10, wherein the first material is a material selected from among refractory metals, such as tungsten, molybdenum, ceramics such as silicon carbide and alloys such as steel.

12. Solar absorber according to any one of claims 1 to 11, wherein the arrangement of the textural elements (88) having the same elementary structure (96) along the reference plane is produced in the form of a paving of elementary networks (120) of textural elements (88),
the elementary networks (120) having one same mesh configuration comprised in the assembly formed by hexagonal meshes, square meshes, triangular meshes and being **characterised by** a degree of compactness of the textural elements.

13. Method for producing a thermal solar absorber capable of functioning at high temperatures, i.e. temperatures greater than or equal to 600°C, and comprising a textured surface structure, the method comprising a first step (204) consisting of providing a substrate having a flat or curved surface, constituted of a first optically reflective material, thermally stable, and having a reference surface, and further comprising a second step (206; 210; 240), executed following the first step (204), consisting of producing an assembly of textural elements having one same elementary structure and distributed along the reference surface according to a two-dimensional arrangement, the elementary structure of a textural element comprising a cavity, formed in the substrate, having an edge at the same level as the reference surface and a bottom, and
**characterised in that** said cavity flares from the bottom to the edge, and **in that** said elementary structure of a textural element comprising a crown, projecting with respect to the reference surface and positioned immediately at the periphery of the edge of the cavity.

14. Production method according to claim 13, wherein the second step (210) comprises successive steps consisting of:
in a third step (212), depositing on the smooth surface of the substrate forming the reference surface, a film of lenticular particles in compact assembly, the lenticular particles being configured to micro-focalise a laser beam on the substrate, then,
in a fourth step (214), subjecting the lenticular particles to an impulse laser beam configured such that when the micro-focalised energy reaches an ablation threshold of the first material constituting the substrate, a cavity is formed in the substrate in the place of a contact zone of the lenticular particle by being accompanied by an increase in material forming a crown around the cavity.

15. Production method according to claim 13, comprising a step (246) of depositing a second single- or multi-layer material on the reference surface of the substrate, executed between the first and second steps (204; 240), the second material having a low emissivity to infrared radiation, and
wherein the second step (240) comprises successive steps consisting of:
in a fifth step (242), depositing on the flat surface of the second material, a film of lenticular particles in compact assembly, the lenticular particles being configured to micro-focalise a laser beam on the layer of the second material and the substrate immediately below, then,
in a sixth step (244), subjecting the lenticular particles to an impulse laser beam, such that when the micro-focalised energy reaches an ablation threshold of the second and first materials, a cavity is formed in the second material and in the substrate in the place of a contact zone of the lenticular particle by being accompanied by an increase in the second material forming a crown around the bored cavity in the substrate.

16. Production method according to any one of claims 14 to 15, wherein the deposition of a compact film of lenticular particles is done by a deposition technique comprised in the assembly formed by a Langmuir-Blodgett, Langmuir-Schaefer technique, and a spinning deposition.

17. Production method according to any one of claims 14 to 16, wherein
the lenticular particles are particles made of a dielectric material comprised in the assembly formed by oxides, silica, quartz, polymers such as polystyrene or particles made of an electrically conductive material comprised in the assembly formed by gold, silver, silver, stainless steel,
the lenticular particles have the shape of a sphere or of a sphere modified by a chemical, thermal, plasma etching process, implemented in an etching step executed between the third and fourth steps (212, 214) or between the fifth and sixth steps (242, 244), the diameter of the sphere being of between a few tens of nm and several tens of microns.

18. Production method according to any one of claims 14 to 17, wherein the laser beam applied on the particle film is collimated and delivered by impulses ranging from the femtosecond to the nanosecond, preferably ranging from the femtosecond to the picosecond.

19. Production method according to any one of claims 14 to 18, comprising a step of cleaning the residual lenticular particles, executed after the second step (206).

20. Production method according to any one of claims 13 to 18, comprising a step of depositing a second single- or multi-layer material, executed after the second step (206) or cleaning step.
